(19) **Europäisches Patentamt**
**European Patent Office**
**Office européen des brevets**

(11) **EP 4 378 871 A1**

(12) **EUROPEAN PATENT APPLICATION**

(43) Date of publication:
**05.06.2024 Bulletin 2024/23**

(21) Application number: **23212126.9**

(22) Date of filing: **24.11.2023**

(51) International Patent Classification (IPC):
**B65H 75/44** *(2006.01)* **B25J 5/00** *(2006.01)*

(52) Cooperative Patent Classification (CPC):
**B65H 75/4484; B25J 5/007; B25J 19/0025;**
B65H 2701/34

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.11.2022 GB 202217941**

(71) Applicant: **The University of Sheffield
Sheffield S10 2TN (GB)**

(72) Inventors:
• **SCRAGGS, Chris
  Bristol (GB)**
• **HIRST, Adrian
  Bristol (GB)**
• **CARMICHAEL, John
  Bristol (GB)**
• **LINDSAY, James
  Bristol (GB)**

(74) Representative: **Abel & Imray LLP
Westpoint Building
James Street West
Bath BA1 2DA (GB)**

(54) **SPOOL TENSION COUPLING, SYSTEM AND METHOD**

(57) A spool tension system (30, 35, 40, 50, 80, 85) is provided for a spooled multiline elongate carrier (45) connected between a ground vehicle (10) and a spooling apparatus, in order to connect the ground vehicle to services. A terminal (30) of the ground vehicle is coupled to one end of the elongate carrier via a sensing arrangement (80, 85) which is arranged to provide a signal indicating tension at the end (90) of the elongate carrier (45). The spooling apparatus is arranged to spool the elongate carrier (45) in response to the signal, such that the tension in the elongate carrier (45) is regulated during movement of the ground vehicle (10).

Fig. 2

**Description**

BACKGROUND OF THE INVENTION

The present invention concerns cable spool arrangements. More particularly, but not exclusively, this invention concerns spooling systems for multi-line chain carriers used in manufacturing and servicing applications where services such as power, compressed air and data are provided by a spooled chain carrier within a facility.

Spool arrangements for services are commonly found in manufacturing and servicing environments, and particularly in reconfigurable facility floors where large vehicles or work pieces may be worked on, and where services may be required at different locations within the facility at different times.

Multi-line chain carriers have been developed which can provide more than one service within the same carrier, using a chain of connected hollow links within which cables and hoses are carried. An example of such a multi-line chain carrier is the plastic e-chain® made by Igus® GmbH. Such chain carriers provide increased protection for the lines, prevent tangling, and reduce the number of discrete cables and hoses which otherwise would extend across the floor of the facility. This improves safety and reduces the likelihood of damage to the cables.

A spooling drum is connected to the service sources, and a chain carrier such as that mentioned above may be spooled from the drum and extended across the floor of the facility where it is connected to the unit or machine requiring the services.

Many spool drums are spring-driven in order to ensure that any excess amount of the carrier is retracted back into the drum. However for larger carriers, the spring force required may be prohibitively large. For example if a multi-line chain carrier is coupled to a mobile vehicle such as an autonomous ground vehicle (AGV), the spring force may cause the AGV to skid or to be prevented from moving.

For this reason, in many applications, motorised spool drums must either be controlled by an operator, or be controlled in a pre-programmed manner to match a known path and speed of the AGV. However such an arrangement is not suitable for manufacturing or servicing processes requiring AGVs to follow a dynamic path.

The present invention seeks to mitigate one or more of the above-mentioned problems. Alternatively or additionally, the present invention seeks to provide an improved spool tension coupling, spool tension system and a tensioning method for a spool.

SUMMARY OF THE INVENTION

The present invention provides, according to a first aspect, a spool tension coupling for coupling a ground vehicle to one or more (preferably multiple) services via an elongate carrier. The carrier extends from a spooling apparatus arranged to spool the elongate carrier. The spool tension coupling comprises a terminal arranged for coupling to an end of the elongate carrier, and a sensor coupled to the terminal and arranged to provide a signal in response to changes in tension at the end of the elongate carrier. In use the signal is used to control the spooling of the spool apparatus in order to regulate the tension at the end of the elongate carrier.

Embodiments of the spool tension coupling facilitate automatic control of the spooling of the elongate carrier based on the changes in tension, thereby providing a flexible system which ensures that an appropriate amount of the elongate carrier is extended between the spool apparatus and the ground vehicle at any one time. This flexibility is especially beneficial in the case of a ground vehicle arranged to move in different paths at different times across a floor of a reconfigurable manufacturing facility.

In embodiments, the automatic spooling control allows the ground vehicle to move freely without being held back by (or causing strain to) the elongate carrier should it be too short. Furthermore, such embodiments are able to prevent an excess amount of the elongate carrier being deployed across the floor, which could otherwise cause a hazard, such as the ground vehicle running over or snagging on the elongate carrier. Such embodiments provide automatic spooling control which obviates the need for an operator to manually control spooling of the elongate carrier.

This may be particularly useful if the elongate carrier is of a size and weight that render it unsuitable for use with a spring-driven spool arrangement, such as when the elongate carrier is arranged to provide multiple services (such as power, compressed air and data) to the ground vehicle while it is moving.

It will also be appreciated that, in embodiments, cables and hoses provided within the elongate carrier are protected and not subject to tension forces, even when the coupling and the elongate carrier are subject to the tension forces described above.

Preferably the end of the elongate carrier is coupled to the terminal via a spring carriage. The sensor of the spool tension coupling senses movement of the spring carriage with respect to the terminal due to forces acting on the spring carriage by the elongate carrier in order to determine the changes in tension at the end of the elongate carrier.

The spring carriage may incorporate springs which centre the spring carriage laterally with respect to the terminal unless subject to forces from the elongate carrier.

The sensor is a preferably a position sensor mounted on the spring carriage and arranged to detect movement with respect to a magnet mounted on the terminal.

The sensor may detect displacement of the spring carriage towards the spooling apparatus when the elongate carrier is under-extended with respect to the distance between the ground vehicle and the spooling apparatus. The sensor may also detect displacement of the spring carriage away from the spooling apparatus when the elongate carrier is over-extended with respect to the distance between the ground vehicle and the spooling apparatus. The displacement of the spring carriage may be in one direction when the elongate carrier is being retracted and spooled onto the spooling apparatus, and the displacement of the spring carriage may be in the opposite direction when the elongate carrier is being extended and spooled from the spooling apparatus. The spring associated with the spring carriage may be under compression, for example when the elongate carrier is being retracted and spooled onto the spooling apparatus, and/or the spring may be under tension, for example when the elongate carrier is being extended and spooled from the spooling apparatus.

The terminal may be arranged to rotate around a generally vertical axis so that the terminal remains aligned with the path of the elongate carrier during movement of the ground vehicle.

The terminal preferably includes a hinged joint for coupling the elongate carrier to the terminal.

The elongate carrier may 'sag' with respect to the terminal, depending upon the distance between the spooling apparatus and the ground vehicle. The hinged joint allows freedom of movement of the end of the elongate carrier with respect to the terminal to take account of this variation in the amount of sag. The hinged joint may be limited in movement in order to prevent bending of the cables and hoses within the elongate carrier and the hinged joint beyond their design limits.

The spool tension coupling may comprise a flexible multi-line cable conduit operably coupled to the hinged joint for providing the services to the ground vehicle.

The flexible multi-line cable conduit ensures that movement of the terminal, the spring carriage or the hinged joint with respect to the ground vehicle may occur whilst maintaining the connection between the services and the ground vehicle.

The flexible multi-line cable conduit may be connected to or otherwise comprise the ends of the cables and hoses provided by the elongate carrier.

According to a second aspect of the invention there is provided a ground vehicle comprising the spool tension coupling as described above.

The ground vehicle may require the services in order to provide functions including autonomous movement of the ground vehicle, and/or to provide the services to a robot or other tool mounted on the autonomous ground vehicle.

According to a third aspect of the invention there is provided a spooling apparatus for providing one or more (preferably multiple) services via an elongate carrier to a ground vehicle. The spooling apparatus is arranged to spool the elongate carrier in response to a received signal. The received signal indicates changes in tension at an end of the elongate carrier coupled to the ground vehicle, such that the spooling apparatus regulates tension in the elongate carrier between the spooling apparatus and the ground vehicle.

The spooling apparatus preferably includes a motorised drum arranged for spooling the elongate carrier in response to the received signal, such that more or less of the elongate carrier extends from the drum in dependence upon the received signal.

According to a fourth aspect of the invention there is provided a spool tensioning system. The system comprises: an elongate carrier; a spooling apparatus arranged to spool the elongate carrier in response to a signal; and a ground vehicle coupled to an end of the elongate carrier via a terminal. The ground vehicle includes a sensor arranged to provide the signal in response to changes in tension at the end of the elongate carrier. In this way during movement of the ground vehicle, spooling of the elongate carrier regulates tension in the elongate carrier.

Preferably the signal is sent via a control cable within the elongate carrier.

It may be that a rate of spooling the elongate carrier is greater when retracting the elongate carrier than when extending the elongate carrier, for example by between 5% and 25% more.

Preferably the rate of spooling when retracting the elongate carrier is greater than the maximum speed of the ground vehicle. This ensures that an excess amount of the elongate carrier does not contaminate the floor of the manufacturing facility, which could be a safety hazard and could interfere with the movement of the ground vehicle.

Preferably the rates of spooling the elongate carrier when retracting and extending are based on the absolute position of the elongate carrier, as provided for by a carrier position signal provided by an absolute position encoder on the shaft of the motorised drum. In this way the feed-rates may be controlled accurately.

The rate of spooling the elongate carrier when extending the elongate carrier may be varied in proportion to changes in tension sensed at the end of the elongate carrier.

This ensures that when the elongate carrier is being extended, the winding speed is regulated according to the velocity of the ground vehicle in relation to the spooling apparatus.

The spool tensioning system preferably includes a controller arranged for receiving the signal from the sensor of the ground vehicle, for processing the signal according to an algorithm; and for providing a control signal based on the signal to the spooling apparatus. The control signal indicates a spooling direction and spooling rate for spooling the elongate carrier which is determined by the algorithm.

The controller preferably comprises an input for receiving the signal from the ground vehicle; a memory containing an algorithm arranged to derive a control signal based on the signal, and a processor arranged to process the algorithm. An output of the controller is arranged for providing the control signal to the spooling apparatus for controlling spooling of the spooling apparatus. In this way during movement of the ground vehicle the controller processes the algorithm in order to regulate spooling of the elongate carrier via the control signal.

The input of the controller may also be arranged to receive the carrier position signal from the motorised drum, and the algorithm may be further arranged to process the carrier position signal in order to determine the speed of operating the motorised drum in order to achieve the desired spooling rate. The rates of spooling may be calculated differently according to whether the elongate carrier is retracting or extending. The algorithm may thus take into account whether the elongate carrier is retracting or extending. It may for example be that the rate of spooling calculated for a given tension measurement at a given instant would be different, everything else being equal, according to whether the elongate carrier is retracting or whether it is extending. The controller may be configured to operate in at least two distinct modes, one being a retract mode, another being an extend mode. The algorithm may be configured to keep the magnitude of the linear speed of the elongate carrier when retracting below a maximum threshold value. The algorithm may be configured to keep the magnitude of the linear speed of the elongate carrier when extending below a maximum threshold value (which may - or may not - be the same value as the threshold when retracting).

The controller may be mounted on the ground vehicle, or on the spooling apparatus, or in a further location remote from the ground vehicle and the spooling apparatus. In all of the above cases at least some of the signals between the controller, the ground vehicle and the spooling apparatus may be transmitted via the elongate carrier.

According to a fifth aspect of the invention there is provided a tensioning method for tensioning an elongate carrier coupled to provide services to a ground vehicle. The method comprises measuring tension at an end of the elongate carrier coupled to the ground vehicle, and controlling winding of a spooling apparatus from which the elongate carrier is spooled in response to the measured tension at the end of the elongate carrier. In this way the tension in the elongate carrier is regulated during movement of the vehicle.

Preferably the step of measuring tension comprises sensing movement in a spring carriage coupled between the end of the elongate carrier and the ground vehicle.

The step of controlling preferably comprises transmitting a signal to the spooling apparatus, the signal preferably being carried by the elongate carrier. For example the signal may be carried via the elongate carrier by a data cable or signal cable carried by (e.g. contained within) the elongate carrier.

The step of controlling may include stopping winding when the measured tension is below non-zero threshold values, such that frequent adjustments of the winding may be avoided for minor changes in tension below the threshold values.

Preferably the elongate carrier comprises a semi-flexible multi-cable elongate chain arranged to house power, data and air lines.

The multi-line elongate chain may comprise a series of connected hollow links, which allow flexion vertically but which are rigid horizontally, such as the plastic e-chain® made by Igus® GmbH. The connected hollow links provide a conduit by which the power and data cables and air lines are carried. The multi-line chain may be twenty metres in length when fully extended from the spooling apparatus.

The services are preferably provided to a robot mounted on the ground vehicle.

It will be appreciated that some or all of the services may be required by the ground vehicle, and in addition some or all of the services may be required by the robot. For example electrical power may be required by the ground vehicle for movement and for powering control and processing systems, and the same electrical power may be required by the robot for control and actuation of functions to be performed by the robot. Alternatively the ground vehicle may be battery powered, and the services may be provided principally for use by the robot or other apparatus mounted on or within the ground vehicle.

Preferably the ground vehicle is an autonomous ground vehicle (AGV) arranged to provide movement of the robot within a reconfigurable manufacturing facility.

It will be understood that the autonomous ground vehicle may move by internal guidance, optical or laser guidance or by some other mechanism, in order to accomplish manufacturing or maintenance tasks at a workpiece within the facility floor.

For example the robot may be providing fabrication or testing steps on a wing, fuselage or other large component of an aircraft within the manufacturing facility. The size of such a component means that the autonomous ground vehicle carrying the robot may have to follow the contours of the component under the direction of the robot and therefore is required to follow a non-linear path over a large area of the manufacturing facility.

The aircraft is preferably a passenger aircraft. The passenger aircraft preferably comprises a passenger cabin comprising a plurality of rows and columns of seat units for accommodating a multiplicity of passengers. The aircraft may have a capacity of at least 20, more preferably at least 50 passengers, and more preferably more than 50 passengers. The aircraft may be a commercial aircraft, for example a commercial passenger aircraft, for example a single aisle or twin aisle aircraft.

According to a sixth aspect of the invention there is provided a controller for controlling spooling of an elongate carrier coupled between a spooling apparatus and a ground vehicle. The controller includes an input for receiving an input signal from the ground vehicle, the input signal indicating tension in the elongate carrier measured at the ground vehicle. A memory of the controller contains an algorithm arranged to derive a control signal based on the input signal and a processor arranged to process the algorithm. An output of the controller is arranged for providing a control signal for controlling spooling of the spooling apparatus. In this way during movement of the ground vehicle, the controller regulates spooling of the elongate carrier via the control signal.

The algorithm may be arranged to specify a rate of spooling for retraction of the elongate carrier, and multiple rates of spooling for extension of the elongate carrier.

The rates of spooling for extension of the elongate carrier may be determined by the algorithm based on the amount of tension in the elongate carrier indicated by the input signal.

Furthermore the rates of spooling for extension and retraction of the elongate carrier may be determined by the algorithm based on the absolute position of the elongate carrier.

Preferably the algorithm is arranged to command stopping of the spooling via the control signal when the sensed tension at the end of the elongate carrier is below a threshold value.

A spooling apparatus, a spool system and a method are described and claimed in EP patent application entitled "SPOOLING APPARATUS AND METHODS RELATING THERETO" with agent's reference "P036732EP PJK JGP", having the same filing date as the present application. The contents of that application are fully incorporated herein by reference. The claims of the present application may incorporate any of the features disclosed in that patent application. In particular, the claims of the present application may be amended to include features relating to the spooling apparatus and the spool system.

It will of course be appreciated that features described in relation to one aspect of the present invention may be incorporated into other aspects of the present invention. For example, the method of the invention may incorporate any of the features described with reference to the apparatus of the invention and *vice versa.*

DESCRIPTION OF THE DRAWINGS

Embodiments of the present invention will now be described by way of example only with reference to the accompanying schematic drawings of which:

Figure 1 shows a side view of a vehicle incorporating a tensioning bracket according to a first aspect of the disclosure;
Figure 2 shows a side view of the tensioning bracket of Figure 1 in greater detail;
Figure 3 shows an end view of the tensioning bracket of Figure 2;
Figures 4a, 4b and 4c show vehicle and spooling apparatus arrangements including ground vehicles comprising the tensioning bracket of Figs. 1, 2 and 3, and
Figure 5 is a flow diagram illustrating a method of tensioning a spooled carrier according to a second aspect of the disclosure.

DETAILED DESCRIPTION

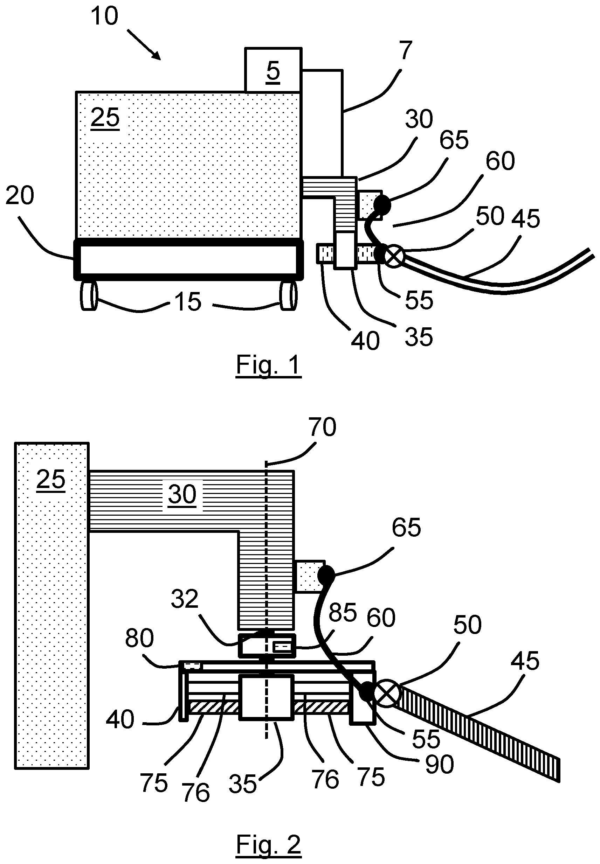

Referring to Fig. 1, an autonomous ground vehicle (AGV) 10 is shown, which includes wheels 15 coupled to a chassis 20, and a body 25. The body 25 includes one or more electric motors (not shown) arranged to drive the wheels 15, and other components (not shown) such as steering, braking and control systems to facilitate movement of the AGV 10. The body 25 may also include a robot (not shown) or other automated or remotely controlled tools. Each of these components may require services including, but not limited to, power, compressed air, and data signals. Furthermore the components of the body 25 may provide data signals which are required to be transmitted via data cables to a remote location.

A coupling or bracket 30 is attached to the body 25 of the AGV 10, in order to provide a connection to receive the services and to transmit the data signals to the remote location via an elongate carrier 45. The bracket 30 includes a drop-link arrangement 35 and a spring carriage 40 to be further described below.

A controller 5 is mounted on the AGV 10, and is provided with power and data via cables 7 coupled to the bracket 30. The controller 5 may be a programmable logic controller (PLC) or similar with a processor, memory and an input/output interface. The controller 5 will be further described below.

The elongate carrier 45 is a semi-flexible multi-line chain, which comprises a series of hollow links. An example of such a multi-line chain carrier is the plastic e-chain® made by Igus® GmbH. Power and data cables and fluid hoses (including gas hoses) may be contained within the elongate carrier 45. The elongate carrier 45 is of a type which allows flexion vertically but which is rigid horizontally.

The elongate carrier 45 has a source end (not shown in Figs. 1 or 2) which is connected to services in a manner to be further described below, and a free end which is coupled via a hinge 50 to the spring carriage 40. The hinge 50 allows the portion of the elongate carrier 45 between the source end and the free end to sag or to remain taught with respect to the spring carriage 40 without damaging the end of the elongate carrier 45 or the spring carriage 40. The hinge 50 has a limited travel, to ensure that the amount of flexion between the free end of the elongate carrier 45 and the bracket 30 is also limited, to prevent bending of the cables and hoses beyond their design limit (i.e. to prevent kinking of the cables and hoses).

The services required by the components of the body 25 (power, compressed air and data) are conveyed from the source end (not shown) by cables and hoses which are carried within the elongate carrier 45 and are provided to the body 25 via a flexible services conduit 60 and a services coupling 65, from where they proceed inside the bracket 40 to the body 25. A mechanical coupling 55 couples the end of the elongate carrier 45 to the bracket 30. Each of the services are transferred from the elongate carrier 45 to the services coupling 65 via the same cables and hoses which extend from the elongate carrier within the flexible services conduit 60. The services coupling 65 may be a composite coupling which provides separate connections for each of the services. In the case of data, it will be appreciated that a data cable of the flexible services conduit 60 may be a bi-directional data cable arranged to transmit data in both directions (from and to the remote ground vehicle). Alternatively there may be two dedicated unidirectional cables, one for each direction of transmission.

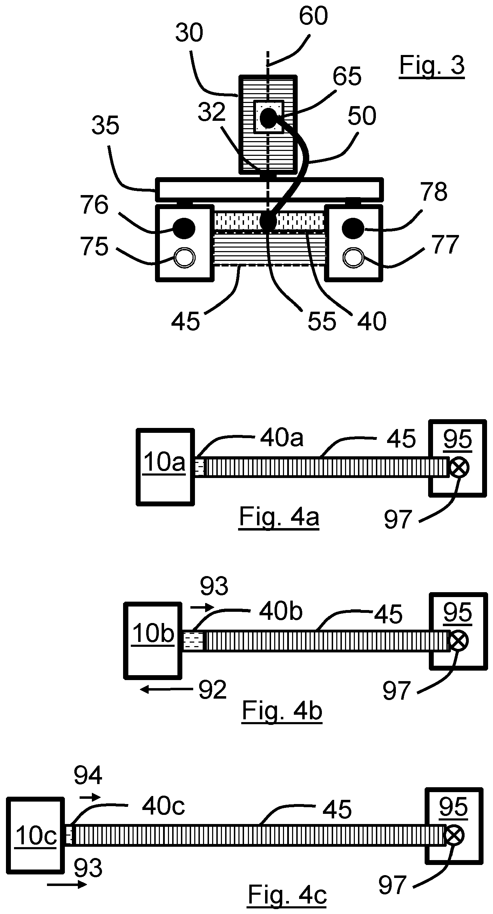

Referring now also to Figs. 2 and 3, the bracket 30 is shown in greater detail. The drop-link arrangement 35 is coupled to the bracket 30 via a bearing 32 which allows the drop-link arrangement 35 and the spring carriage 40 to rotate about a vertical axis 70. This rotation allows the spring carriage 40 to be oriented towards the source end of the elongate carrier 45.

The spring carriage 40 includes guides 75, 76, 77 and 78 which allow the spring carriage 40 to slide laterally (to the left and right in Fig. 2) in relation to the drop-link arrangement 35. The lower guides 75 and 77 are sprung with coiled springs, so that the spring carriage 40 is centred laterally with respect to the drop-link arrangement 35 unless subject to forces to be further described below.

The flexible services cable 60 ensures that the services are provided to the vehicle 10 whilst allowing the spring carriage 40 to rotate about the vertical axis 70 and to slide laterally as described above.

A linear position arrangement (such as an MTS E-series magnet based rod sensor arrangement manufactured by Temposonics LLC), is incorporated in the bracket 30 in the following way: a linear position sensor 80 is incorporated in the spring carriage and a linear position magnet 85 is mounted on a fixed portion of the drop-link arrangement 35. The linear position sensor 80 and the linear position magnet 85 cooperate in order to provide a displacement position signal which indicates lateral displacement of the spring carriage 40 in relation to the drop-link arrangement 35. In this way the displacement position signal provides an indication of the displacement of the spring carriage 40 from its centred position.

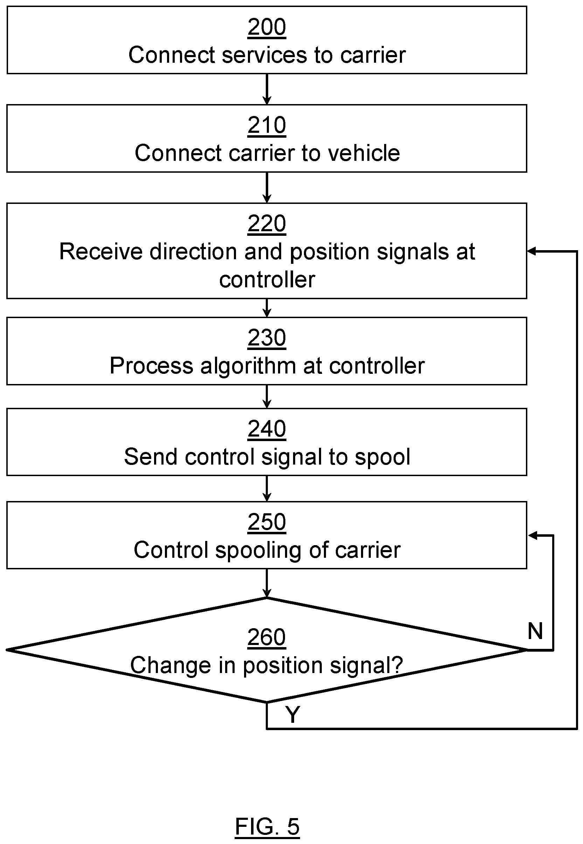

In operation, and referring now also to FIGs. 4a and 4b and FIG. 5, a spooling apparatus 95 is shown, which is coupled to the services (not shown), as depicted in box 200 of FIG. 5.

The spooling apparatus 95 has a motorised drum 97 which is arranged to extend or retract the elongate carrier 45 in dependence on a control signal received from the controller 5. The control signal is transmitted from the controller 5 to the motorised drum via cables 7 and via a data cable (not shown) within the elongate carrier 45.

It will be appreciated that the amount of the elongate carrier 45 extended or retracted per rotation of the motorised drum 97 changes according to how much of the elongate carrier 45 is spooled on the motorised drum 97. An absolute encoder on the shaft of the motorised drum 97 (not shown) is therefore used in order to determine the absolute position of the elongate carrier 45 and to provide a carrier position signal to the controller 5, such that feed-rate of the elongate carrier 45, rather than drum rotation of the motorised drum 97, may be controlled by the controller 5 in a manner to be further described below.

The motorised drum 97 has a variable feed-rate for extending the elongate carrier 45 and a fixed feed-rate for retracting the elongate carrier 45, to be further described below.

Ground vehicle 10a (which is substantially similar to AGV 10 above) is then connected to the elongate carrier 45 via spring carriage 40a (represented by box 210 of FIG. 5). The ground vehicle 10a is arranged to move within the manufacturing facility. The controller 5 is arranged to receive a direction data signal from the ground vehicle 10a, which indicates whether the ground vehicle 10a is moving away from or towards the spooling apparatus 95.

Referring now also to FIG. 4b, the ground vehicle 10a may be required to move to a different part of the manufacturing facility, and so may begin moving away from the spooling apparatus 95 (shown by ground vehicle 10b, and arrow 92), and sends the direction data signal indicating the same to the controller 5.

The spring carriage (now shown as spring carriage 40b) will be pulled towards the spooling apparatus 95 (as shown by arrow 93) due to the force exerted by the elongate carrier 45. The linear displacement of the spring carriage 40b is detected by the linear position sensor 80 (not shown) within the ground vehicle 10b, which provides this information via a displacement position signal to the controller 5 (represented by box 220).

The processor of the controller 5 processes the direction data signal, the displacement position signal and the carrier position signal (represented by box 230) according to an algorithm stored in the memory of the controller 5 and a resulting control signal is transmitted (represented by box 240) to the motorised drum 97 by the controller 5 via the cables 7 and the data cable within the elongate carrier 45.

The algorithm selects a 'retract mode' if the direction data signal indicates that the ground vehicle 10a is moving towards the spooling apparatus 95, and conversely an 'extend mode' if the direction data signal indicates that the ground vehicle 10a is moving away from the spooling apparatus 95. The motorised drum 97 then either feeds-out ('extend mode') or feeds-in ('retract mode') the elongate carrier 45 (represented by box 250) at a rate determined by the controller 5 and indicated by the control signal. In this case, with the 'extend mode' set, the control signal will command the motorised drum 97 to feed-out the elongate carrier 45 at a first feed-out rate. Further details of the steps of the algorithm and the derivation of the control signal are described below.

If ground vehicle 10b continues to accelerate away from the spooling apparatus 95, the first feed-out rate of the motorised drum 97 may be less than the velocity of the ground vehicle 10b relative to the spooling apparatus 95, and therefore the 'positive' tension experienced by the spring carriage 40b may increase. This will cause the displacement position signal to change (represented by box 260, Y-line), in this case to a higher value. This new value is received by the controller 5 (represented by box 220), which will in turn cause the algorithm to change the control signal (represented by box 240) to command a faster feed-out rate of the motorised drum 97 (represented by box 250), which is faster than the first feed-out rate. The algorithm is arranged such that when in 'extend mode' (i.e. feeding out), several feed-out rates may be commanded, depending on the tension experienced by the spring carriage 40b. The greater the tension, the greater the value of the displacement position signal and the greater the feed-out rate commanded.

This process may be repeated until a steady state is reached where the velocity of the ground vehicle 10b (relative to the spooling apparatus 95), is matched by the feed-out speed of the spooling apparatus 95 (at which point there is no change in the displacement position signal, as shown by the N-line from box 260).

If however the measured tension exceeds a certain value, a safety cut-out stops movement of the ground vehicle 10b, in order to prevent damage to the system.

When the ground vehicle 10b slows down or stops, the tension experienced by the spring carriage 40b will decrease as the velocity of the ground vehicle 10b becomes slower than the feed-out rate commanded, at which point the displacement position signal will change. This new displacement position signal is received at the controller 5 (represented by box 220), processed by the algorithm (represented by box 230) and the controller 5 will command the motorised drum 97 accordingly via the control signal (represented by box 240). If the ground vehicle 10b has slowed down but is still moving away from the spooling apparatus 95, the displacement position signal will indicate a reduced (but non-zero) displacement, in which case the control signal will command a reduced feed-out rate to the motorised drum 97. If the ground vehicle 10b stops moving with respect to the spooling apparatus 95, the control signal will command the motorised drum 97 to stop feeding out. In either case the motorised drum 97 follows the command of the control signal (represented by box 250).

Referring now also to Fig. 4c, if the ground vehicle 10c is stationary and starts moving towards the spooling apparatus 95 (as shown by arrow 93), the direction data signal from the ground vehicle will indicate to the controller 5 that 'retract mode' should be set. The controller 5 will process the displacement position signal (box 230) according to the algorithm in 'retract mode' and send a control signal (box 240) to command the motorised drum 97 to retract (feed-in) the elongate carrier 45 (box 250). The feed-in rate is fixed and is chosen to exceed the known maximum speed of the ground vehicle 10c so that the retraction of the elongate carrier 45 is always sufficient to prevent an excess amount of the elongate carrier 45 remaining between the spooling apparatus 95 and the ground vehicle 10c.

This continues until the tension experienced by the spring carriage 40c exceeds a certain value, (box 260, Y-line) indicating that the ground vehicle 10c has stopped and that the elongate carrier 45 has retracted sufficiently to cause this certain value of tension in the spring carriage 40c. The displacement position signal indicating this tension is received by the controller 5 (box 220) the algorithm processes the displacement position signal (box 230) and provides an updated control signal to the spooling apparatus 95 (box 240) to command the motorised drum 97 to stop feeding-in the elongate carrier 45 (box 250).

In this way the controller 5 controls the spooling of the elongate carrier 45 in a way which, when extending, regulates the feed-out speed of the elongate carrier 45 to substantially match the velocity of the ground vehicle 10, and when retracting, ensures that the feed-in speed of the elongate carrier 45 is at a constant rate which exceeds the maximum velocity of the ground vehicle 10. This ensures that any excess amount of the elongate carrier 45 is quickly retracted, thus preventing a situation where the ground vehicle 10 could run over the elongate carrier 45.

The algorithm thus determines the feed-in and feed-out speeds to be commanded via the control signal based on three factors:

a) The mode (extend or retract), given by the direction signal;
b) The displacement/tension measured at the bracket, given by the displacement position signal; and
c) The amount of the elongate carrier 45 that has been unspooled so far, given by the carrier position signal.

The algorithm comprises three steps. The first step is to select which mode (extend or retract) is to be used, by processing the direction data signal to determine the direction of travel of the ground vehicle 10.

The second step is to calculate, for whichever mode is selected, the linear speed target for the spooling apparatus 95. For either mode, the input variable (CouplingDisplacement) is the displacement (in mm) of the spring carriage 40, which relates to the tension at the bracket. When in the extend mode, the displacement will be a negative value (corresponding to tension in the spring of the spring carriage), whereas in the retract mode, the displacement will be a positive value (corresponding to less tension, possibly negative tension, i.e. compression in the spring). This is modified by adding/subtracting an offset (threshold) distance, which depends on whether the system is in extend mode or retract mode and then multiplying by a scaling factor. This returns a linear speed target, Target Velocity (in mm/s) for that tension.

For extend mode (feed-out) the equation in this embodiment is:

$$\text{TargetVelocity} = \text{Scaling factor} * (\text{CouplingDisplacement} + \text{"Offset Distance For Extend Mode"}).$$

In this embodiment, this simplifies to:

$$\text{TargetVelocity} = -6.8 * (\text{CouplingDisplacement} + 2)$$

This value is in mm/s, and provided that CouplingDisplacement < -2mm, will be a positive value. It is also capped in the code, so the value cannot go below 0 or above 100mm/s.

For retract mode (feed-in), the equation for the TargetVelocity (in the opposing direction) is:

$$\text{TargetVelocity} = \text{Scaling factor} * 110\% * (\text{CouplingDisplacement} - \text{"Offset Distance For Retract Mode"}).$$

In this embodiment, this simplifies to:

$$\text{TargetVelocity} = -7.5 * (\text{CouplingDisplacement} - 5)$$

This value is also in mm/s, and provided that CouplingDisplacement > +5mm, will be a negative value. It is also capped in the code, so it cannot go below -100 or above 0mm/s.

The third step of the algorithm is to derive from the TargetVelocity, a rotational speed (RotationalVelocity) for the motorised drum 97, based on an indication of how much of the elongate carrier has been fed-out at that point. This is required because the relationship between a linear output speed and the rotation speed required is not fixed (as the diameter reduces as the spool is extended, and increases as it is retracted). The relationship between the (change in) diameter of the spool and the (change in) length of elongate carrier on the spool may be assumed to be directly (linearly) proportional. The relationship between the linear speed (TargetVelocity) and the rotational (angular) speed RotationalVelocity is thus:

$$\text{TargetVelocity} \; \alpha \; \text{RotationalVelocity} * (\text{Fixed\_parameter} - \text{Paid\_out\_length}),$$

where:
Fixed_parameter relates to an initial length of conduit on the spool, and Paid_out_length is the amount, as a distance, of the conduit fed from the spool.

In this embodiment, the variable Paid_out_length (i.e. the length of the elongated carrier that has been paid out from the spool) can be calculated with reference to a counter/encoder, that counts the rotational position of the spool (for example, incrementing a counter according to every 5 degrees rotated). Alternatively, a counter/encoder could count the number of links of the elongate carrier that pass a given position (or at least returns a number or variable that is proportional to the length of the elongated carrier paid out). Either way, it is then possible from the signal from the counter/encoder to calculate the change in a diameter of the outermost layer of the elongate carrier on the spool. As a result of the output from the counter/encoder, the algorithm has as an input "EncoderPulseCount" which can be assumed to be directly proportional to the paid out length.

In this embodiment, the required RotationalVelocity can be calculated as:

$$RotationalVelocity = TargetVelocity / (Parameter\_1 - Parameter\_2 * EncoderPulseCount),$$ where

Parameter_1 and Parameter_2 will be numbers dependent on the particular set-up and will depend for example on things such as the relationship between the various dimensions of parts of the system, the mechanics of the spooling apparatus used, the units of measurement used and how the variable EncoderPulseCount relates to the paid out length.

The value of RotationalVelocity thus calculated is a rotational velocity in RPM for the motorised drum 97, corresponding to the linear target in mm/s.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

For example the number and types of services provided via the elongate carrier may be different from those described above.

Furthermore the spring carriage and sensor arrangement may differ from that described above. For example the spring carriage and sensor may be replaced by an inline strain gauge coupled between the terminal and the elongate carrier.

Furthermore the precise arrangement of the functions of the controller 5, the algorithm and the details of the feed-out and feed-in rates may differ from those described above.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A spool tension coupling for coupling a ground vehicle to receive multiple services via an elongate carrier, the elongate carrier extending from a spooling apparatus arranged to spool the elongate carrier, the coupling comprising:

   a terminal arranged for coupling to an end of the elongate carrier; and
   a sensor coupled to the terminal and arranged to provide a signal indicating tension at the end of the elongate carrier,

   wherein in use the signal is used to control the spooling of the spool apparatus in order to regulate the tension at the end of the elongate carrier.

2. The spool tension coupling of claim 1, wherein the end of the elongate carrier is coupled to the terminal via a spring carriage, such that the sensor senses displacement of the spring carriage with respect to the terminal in order to determine the tension at the end of the elongate carrier.

3. The spool tension coupling of claim 2, wherein the sensor is a position sensor mounted on the spring carriage and arranged to detect movement with respect to a magnet mounted on the terminal.

4. The spool tension coupling of any preceding claim, wherein the terminal includes a hinged joint for coupling the elongate carrier to the terminal.

5. A ground vehicle comprising the spool tension coupling of any preceding claim.

6. A spooling apparatus for providing multiple services via an elongate carrier to a ground vehicle, the spooling apparatus being arranged to spool the elongate carrier in response to a received signal, wherein the received signal indicates changes in tension at an end of the elongate carrier coupled to the ground vehicle, such that the spooling apparatus regulates tension in the elongate carrier between the spooling apparatus and the ground vehicle.

7. A spool tensioning system, comprising:

   an elongate carrier;
   a spooling apparatus arranged to spool the elongate carrier in response to a signal; and,
   a ground vehicle coupled to an end of the elongate carrier to receive multiple services via the elongate carrier, the ground vehicle including a sensor arranged to provide the signal in response to changes in tension at the end of the elongate carrier,

   wherein during movement of the ground vehicle, spooling of the elongate carrier regulates tension in the elongate carrier.

8. The spool tensioning system of claim 7, wherein the signal is sent via a control cable within the elongate carrier.

9. The spool tensioning system of claim 7 or claim 8, further comprising a controller, the controller comprising:

   an input for receiving the signal from the ground vehicle;
   a memory containing an algorithm arranged to derive a control signal based on the signal;
   a processor arranged to process the algorithm; and
   an output for providing the control signal to the spooling apparatus for controlling spooling of the spooling apparatus,

   wherein during movement of the ground vehicle, the controller processes the algorithm in order to regulate spooling of the spooling apparatus via the control signal.

10. A tensioning method for tensioning an elongate carrier coupled to provide multiple services to a ground vehicle, the method comprising:

   measuring tension at an end of the elongate carrier coupled to the ground vehicle; and
   controlling winding of a spooling apparatus from which the elongate carrier is spooled in response to the measured tension at the end of the elongate carrier,

   wherein the tension in the elongate carrier is regulated during movement of the vehicle.

11. The method of claim 10 wherein the step of measuring tension comprises sensing movement in a spring carriage coupled between the end of the elongate carrier and the ground vehicle, and optionally wherein the step of controlling comprises transmitting a signal to the spooling apparatus via the elongate carrier.

12. The spool tensioning system or method of any one of claims 7 to 11, wherein the elongate carrier comprises power, data and air lines arranged in a semi-flexible elongate chain, and optionally wherein the services are provided to a robot mounted on the ground vehicle.

13. The spool tensioning system or method of claim 12, wherein the ground vehicle is an autonomous ground vehicle arranged to provide movement of the robot within a reconfigurable manufacturing facility.

14. A controller for controlling spooling of an elongate carrier coupled between a spooling apparatus and a ground vehicle; the controller comprising:

   an input for receiving an input signal from the ground vehicle, the input signal indicating tension in the elongate carrier measured at the ground vehicle;
   a memory containing an algorithm arranged to derive a control signal based on the input signal;

a processor arranged to process the algorithm; and
an output for providing a control signal for controlling spooling of the spooling apparatus,

wherein during movement of the ground vehicle, the controller regulates spooling of the elongate carrier via the control signal.

15. The controller of claim 14, wherein the algorithm is arranged to suppress the control signal when the sensed tension at the end of the elongate carrier is below a threshold value.

Fig. 1

Fig. 2

30   60

Fig. 3

65

32   50

35

76   78

75   77

45   55   40

10a   40a   45   95

Fig. 4a

97

93   40b   45   95

10b

92   Fig. 4b   97

94   40c   45   95

10c

93   Fig. 4c   97

200
Connect services to carrier

210
Connect carrier to vehicle

220
Receive direction and position signals at controller

230
Process algorithm at controller

240
Send control signal to spool

250
Control spooling of carrier

260
Change in position signal?

N

Y

FIG. 5

Europäisches
Patentamt
European
Patent Office
Office européen
des brevets

## EUROPEAN SEARCH REPORT

Application Number

EP 23 21 2126

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H11 147672 A (NIPPON STEEL WELDING PROD ENG) 2 June 1999 (1999-06-02) * paragraphs [0001], [0005], [0006], [0008], [0010], [0014] – [0016]; figures * | 1-15 | INV. B65H75/44 B25J5/00 |
| X | JP S60 171972 A (MEIDENSHA ELECTRIC MFG CO LTD) 5 September 1985 (1985-09-05) * the whole document * | 1,4-10, 12-15 | |
| A | WO 2016/124546 A1 (IGUS GMBH [DE]) 11 August 2016 (2016-08-11) * page 12, lines 14-31; figures * | 1-15 | |
| A | WO 2017/182583 A1 (IGUS GMBH [DE]) 26 October 2017 (2017-10-26) * page 18, line 29 – page 19, line 22; figures * | 1-15 | |
| A | DE 10 2019 117083 B3 (RICO GMBH [DE]) 10 June 2020 (2020-06-10) * paragraphs [0001], [0003], [0004], [0008], [0010], [0011], [0026]; figures * | 1-15 | TECHNICAL FIELDS SEARCHED (IPC) B65H H02G B25J |

The present search report has been drawn up for all claims

| Place of search | Date of completion of the search | Examiner |
|---|---|---|
| The Hague | 28 March 2024 | Lemmen, René |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 21 2126

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2024

| Patent document cited in search report | | Publication date | Patent family member(s) | | Publication date |
|---|---|---|---|---|---|
| JP H11147672 | A | 02-06-1999 | NONE | | |
| JP S60171972 | A | 05-09-1985 | JP H0659981 B2 | | 10-08-1994 |
| | | | JP S60171972 A | | 05-09-1985 |
| WO 2016124546 | A1 | 11-08-2016 | CN 107431345 A | | 01-12-2017 |
| | | | DE 202015100484 U1 | | 03-03-2016 |
| | | | EP 3253992 A1 | | 13-12-2017 |
| | | | ES 2908420 T3 | | 29-04-2022 |
| | | | JP 6706265 B2 | | 03-06-2020 |
| | | | JP 2018512540 A | | 17-05-2018 |
| | | | KR 20170109591 A | | 29-09-2017 |
| | | | PL 3253992 T3 | | 30-05-2022 |
| | | | TW 201636520 A | | 16-10-2016 |
| | | | US 2018026432 A1 | | 25-01-2018 |
| | | | WO 2016124546 A1 | | 11-08-2016 |
| WO 2017182583 | A1 | 26-10-2017 | CN 109562905 A | | 02-04-2019 |
| | | | DE 202016102087 U1 | | 26-05-2017 |
| | | | EP 3445695 A1 | | 27-02-2019 |
| | | | ES 2783848 T3 | | 18-09-2020 |
| | | | JP 7084876 B2 | | 15-06-2022 |
| | | | JP 2019520282 A | | 18-07-2019 |
| | | | KR 20180135937 A | | 21-12-2018 |
| | | | PL 3445695 T3 | | 10-08-2020 |
| | | | SG 11201809255U A | | 29-11-2018 |
| | | | US 2020185900 A1 | | 11-06-2020 |
| | | | WO 2017182583 A1 | | 26-10-2017 |
| DE 102019117083 | B3 | 10-06-2020 | NONE | | |

EPO FORM P0459

For more details about this annex : see Official Journal of the European Patent Office, No. 12/82